# FASCICULE DE BREVET EUROPEEN

(11) **EP 0 402 263 B1**
(45) Date de publication et mention de la délivrance du brevet: **08.09.1993**
(21) Numéro de dépôt: 90401556.7
(22) Date de dépôt: 07.06.1990
(51) Int. Cl.: B64G 1/44

(54) **Dispositif de liaison temporaire, notamment pour appendice de satellite artificiel, et procédé de libération d'une telle liaison**
Vorrichtung zum zeitweiligen Verbinden, vorzugsweise ein Ansatzteil eines künstlichen Satellitens und Verfahren zum Lösen dieser Verbindung
Device for a temporary connection, especially for the appendix of an artificial satellite and process of opening this connection

(30) Priorité: 09.06.1989 FR 8907667
(43) Date de publication de la demande: 12.12.1990
(73) Titulaire: AEROSPATIALE Société Nationale Industrielle, 75781 Paris Cédex 16 (FR)
(72) Inventeur: Vezain, Gérard, F-06210 Mandelieu (FR); Long, Christian, F-06110 Le Cannet (FR); Marchal, Jean, F-06530 Peymeinade (FR)
(74) Mandataire: Mongrédien, André

(56) Documents cités:
- EP-A- 0 081 401
- EP-A- 0 121 959
- DE-A- 2 203 470
- FR-A- 2 598 383

## Description

L'invention concerne un dispositif permettant de relier plusieurs éléments de façon temporaire, ainsi qu'un procédé de libération de ces éléments.

Ce dispositif et ce procédé sont particulièrement adaptés pour être utilisés dans le domaine spatial, par exemple sur des satellites artificiels et sur des stations orbitales, sur lesquels sont fixés de façon provisoire des sous-systèmes ou des équipements tels que des antennes ou des panneaux solaires qui doivent être libérés après la mise en orbite.

Les dispositifs de liaison temporaire utilisés dans le domaine spatial comprennent habituellement un mécanisme de maintien qui assure, avant et pendant la mise en orbite, la liaison entre l'appendice et le corps du satellite. A cet effet, ce mécanisme applique entre les deux éléments une tension mécanique de maintien. Selon les cas, ce mécanisme est constitué soit par un tirant métallique ou en "Kevlar" (marque déposée), soit par un étrier basculant articulé, par exemple, sur l'appendice fixé sur le satellite.

Les dispositifs de liaison temporaire comprennent aussi des moyens de libération du mécanisme de maintien.

Dans la grande majorité des cas, ces moyens de libération comprennent des composants pyrotechniques. En particulier, des cisailles pyrotechniques sont habituellement associées aux tirants métalliques pour en commander la rupture. De même, les étriers basculants, sont maintenus en place à l'encontre de l'action d'un ressort par un mécanisme de verrouillage dont la libération est commandée soit en coupant une tige de ce mécanisme au moyen d'une cisaille pyrotechnique, soit par un câble actionné par un pyromécanisme et libérant simultanément les mécanismes de verrouillage de plusieurs dispositifs de liaison.

Dans le cas des tirants en "Kevlar", les moyens de libération comprennent une résistance de chauffage entourant le tirant pour en commander l'allongement ou la fusion (cf. par exemple EP-A- 0 121 959).

Dans ces dispositifs de liaison temporaire existants, les moyens de libération utilisés actuellement présentent tous des inconvénients notables.

Ainsi, les composants pyrotechniques présentent un encombrement et une masse souvent contraignants, et ils induisent des chocs lors de leur mise en oeuvre. De plus, les composants pyrotechniques doivent impérativement être étanches, afin d'éviter toute pollution des équipements embarqués sur les satellites, en particulier lorsque ces équipements comportent des optiques. Les composants pyrotechniques ont également pour inconvénient d'avoir des domaines de fonctionnement très limités, en ce qui concerne les performances fonctionnelles et les environnements, ce qui conduit pour chaque cas particulier soit au développement d'un produit nouveau, soit à des compléments de qualification longs et coûteux. Le coût élevé de ces composants limite donc le nombre d'essais au juste besoin. Enfin, la nature des composants pyrotechniques impose des précautions particulières lors de leur mise en oeuvre et conduit, lorsqu'un appendice est fixé en plusieurs points, à multiplier d'autant le nombre d'ordres pyrotechniques sur le satellite.

Par ailleurs, les mécanismes à tirant en "Kevlar" libérés au moyen d'une résistance de chauffage sont coûteux et demandent une énergie électrique importante, notamment dans le cas où il faut obtenir la fusion du tirant. De plus, la fusion du Kevlar peut entraîner une pollution non admissible pour les composants voisins, par exemple dans les dispositifs optiques comprenant des miroirs ou des lentilles.

L'invention a précisément pour objet un dispositif de liaison temporaire comportant un mécanisme de maintien d'un type quelconque et des moyens de libération de ce mécanisme ne présentant pas les inconvénients des composants pyrotechniques et des résistances de chauffage associées à des tirants en "Kevlar".

A cet effet, il est proposé un dispositif de liaison temporaire de plusieurs éléments entre eux, comprenant un mécanisme de maintien apte à appliquer entre lesdits éléments une tension mécanique de maintien, et des moyens de libération dont un actionnement a pour effet de supprimer ladite tension mécanique et de créer un jeu autorisant un mouvement relatif entre les élémments, caractérisé par le fait que les moyens de libération comprennent un organe de libération réalisé en un matériau à mémoire de forme et coopérant avec le mécanisme de maintien.

L'utilisation d'un organe de libération en un matériau à mémoire de forme permet, en chauffant cet organe au-delà d'une température de transformation structurale du matériau, d'en modifier la forme et/ou les dimensions.

Dans le cas où le mécanisme de maintien comprend un tirant, le changement de forme de l'organe de libération peut être utilisé pour commander un allongement de ce tirant, ou même sa rupture, si l'on prévoit sur le tirant une zone de moindre résistance.

Lorsque le mécanisme de maintien comprend un étrier basculant, le changement de forme de l'organe de libération peut être utilisé pour libérer le mécanisme de verrouillage associé à cet étrier, par exemple en allongeant une tige du mécanisme de verrouillage, jusqu'à sa rupture.

Il est rappelé qu'un matériau à mémoire de forme est un matériau qui présente deux phases cristallines stables, respectivement austénitique et martensitique, selon que sa température est supérieure ou inférieure à la température de transformation structurale caractéristique de ce matériau. Lorsque le matériau en phase martensitique est soumis à une contrainte mécanique, il est déformé plastiquement et conserve cette déformation tant que la température reste inférieure à sa température de transformation structurale. Dès que la température devient supérieure à ce seuil, la structure redevient austénitique et le matériau reprend sa forme initiale.

L'utilisation d'un organe de libération en un matériau à mémoire de forme présente de nombreux avantages par rapport aux techniques actuelles.

Ainsi, étant donné que la libération est engendrée par un phénomène physique, la fiabilité est totale. De plus, un organe de libération ainsi réalisé permet de supprimer les chocs et de s'affranchir des problèmes de pollution posés par l'utilisation de composants pyrotechniques. En outre, l'utilisation d'un matériau à mémoire de forme permet d'adapter les performances mécaniques (effort, etc.) aux besoins en agissant sur les dimensions de l'organe de libération, tout en réduisant la masse, l'encombrement et le prix par rapport aux techniques existantes. Si nécessaire, une redondance mécanique peut être obtenue simplement en plaçant en série ou en parallèle deux organes de libération en un matériau à mémoire de forme. Enfin, le réchauffage permettant de réaliser le changement d'état du matériau peut ne pas être obtenu par l'énergie électrique du satellite, mais en utilisant l'énergie solaire par une orientation adéquate du satellite, ce qui simplifie les moyens de mise en oeuvre (câblage, etc.) et les interfaces.

L'invention a aussi pour objet un procédé de libération d'éléments liés entre eux par un mécanisme de maintien appliquant entre lesdits éléments une tension mécanique de maintien, caractérisé par le fait qu'il consiste à chauffer un organe de libération réalisé en un matériau à mémoire de forme au-delà d'une température de changement de phase de ce matériau, cet organe de libération coopérant avec le mécanisme de maintien pour supprimer alors ladite tension mécanique et créer un jeu autorisant un mouvement relatif entre les éléments.

Un mode de réalisation préféré de l'invention, ainsi qu'une variante de ce mode de réalisation, vont à présent être décrits en se référant aux dessins annexés, dans lesquels :
- la figure 1 est une vue en coupe longitudinale d'un dispositif de liaison temporaire conforme à l'invention ;
- la figure 2 est une vue à plus grande échelle du dispositif de la figure 1, illustrant la mise en oeuvre des moyens de libération ;
- la figure 2A illustre très schématiquement la libération d'un appendice de satellite fixé par trois dispositifs tels qu'illustrés sur les figures 1 et 2 ; et
- les figures 3 et 4 sont des vues en coupe longitudinale représentant une variante du dispositif de liaison temporaire des figures 1 et 2, respectivement en position de liaison et lors de la libération.

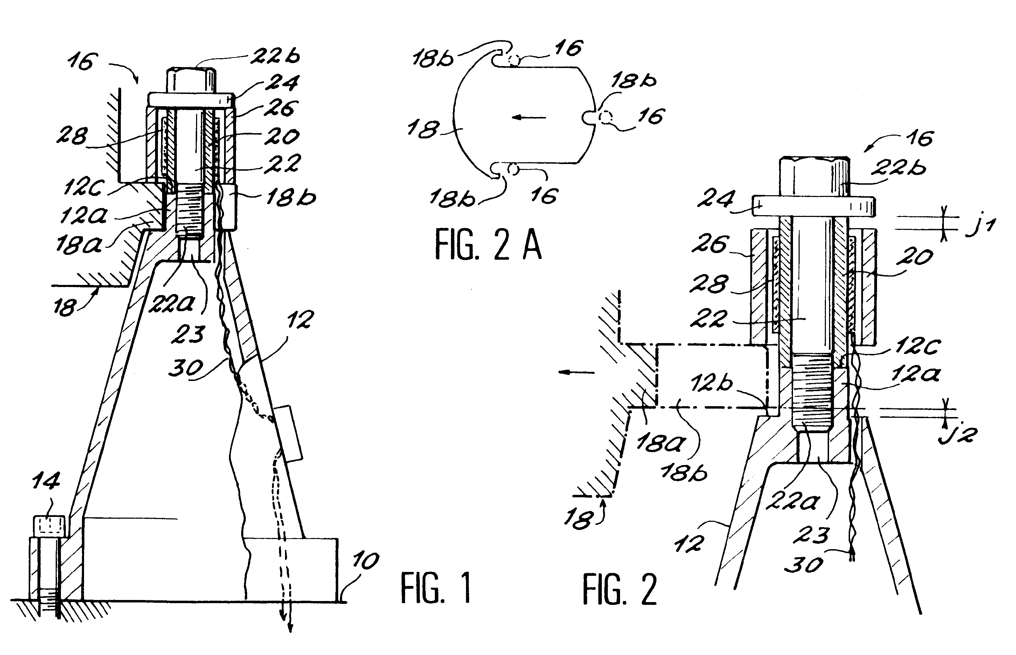

Sur la figure 1, la référence 10 désigne le corps d'un satellite artificiel, ou d'un autre engin spatial tel qu'une station orbitale.

Aux endroits ou des appendices tels que des antennes ou des panneaux solaires doivent être fixés temporairement lors de la mise sur orbite, par exemple avant leur déploiement, des pieds 12 sont fixés sur le corps 10, par exemple au moyen de vis 14.

A l'extrémité de chacun des pieds 12 est placé un dispositif de liaison temporaire 16 conforme à l'invention. Chaque dispositif 16 permet, lors du lancement et jusqu'au moment de la libération (par exemple après la mise en orbite), de maintenir fixement un appendice 18, plusieurs dispositifs pouvant être utilisés pour maintenir un même appendice, comme l'illustre la figure 2A.

Chacun des dispositifs de liaison temporaire 16 se compose d'un mécanisme de maintien avec lequel coopèrent des moyens de libération comprenant un organe de libération 20 réalisé, conformément à l'invention, en un matériau à mémoire de forme.

Dans le mode de réalisation représenté sur les figures 1 et 2, le mécanisme de maintien comprend une tige de liaison constituée par une vis 22 dont l'extrémité filetée 22a est vissée dans un trou taraudé 23 formé dans une extrémité cylindrique 12a du pied 12, et dont la tête 22b est en appui sur une patte 18a de l'appendice 18, par l'intermédiaire d'une rondelle 24 et d'une entretoise tubulaire 26.

De façon plus précise, la patte 18a comporte un trou 18b ouvert latéralement, dans lequel est engagée l'extrémité cylindrique 12a du pied 12. Lorsque la vis 22 est serrée, la patte 18a est pressée avec une tension mécanique de maintien correspondant au serrage de la vis, entre la tête 22b de cette dernière et un épaulement 12b formé sur le pied 12, à la base de l'extrémité cylindrique 12a, par l'intermédiaire de la rondelle 24 et de l'entretoise tubulaire 26. Dans ces conditions, l'appendice 18 est relié solidement au corps 10 du satellite.

Dans le mode de réalisation des figures 1 et 2, l'organe de libération 20 a la forme d'une entretoise tubulaire qui est disposée autour de la vis 22, à l'intérieur de l'entretoise tubulaire 26, de telle sorte que ses extrémités soient respectivement en appui sous la rondelle 24 et sur la face d'extrémité 12c de l'extrémité cylindrique 12a du pied 12. L'expression "en appui" utilisée ici n'exclut pas qu'un léger jeu, nécessaire pour assurer l'isostatisme de la liaison, puisse exister entre l'entretoise 20 en alliage à mémoire de forme et le reste de l'assemblage, dans les conditions illustrées sur la figure 1 qui correspondent au cas où la température est inférieure à la température de transformation de l'alliage à mémoire de forme dans lequel est réalisée cette entretoise 20.

Pour la réalisation de l'entretoise tubulaire 20, on choisit un alliage à mémoire de forme convenable, en fonction des conditions d'utilisation, en tenant compte en particulier de la température de changement de phase de l'alliage. De façon nullement limitative, on citera parmi les matériaux à mémoire de forme utilisables dans l'invention les alliages à base de fer (Fe-C, Fe-Cr, Fe-Ni...), des alliages cuivreux ou de métaux nobles (Cu-Zn, Cu-Sn, Cu-Al, Cu-Zn-Al, Cu-Zn-Al-Ni, Cu-Al-Ni, Ag-Cd, Au-Cd,...), des alliages à base de titane et/ou de nickel (Ni-Ti, Ni-Ti-Fe, Ni-Al,...) et certains métaux purs (Co, Ti, Na).

Dans le mode de réalisation illustré sur les figures 1 et 2, le chauffage de l'entretoise tubulaire 20 en matériau à mémoire de forme jusqu'à la température de transformation de ce matériau est obtenu au moyen d'un dispositif de chauffage constitué, par exemple, par une résistance électrique 28 placée directement autour de l'entretoise 20. Des conducteurs électriques 30 permettent de relier cette résistance électrique 28 à une source de courant électrique (non représentée) embarquée sur le satellite, par l'intermédiaire d'un interrupteur (non représenté) ouvert lors du lancement.

Lorsqu'un ordre de fermeture de cet interrupteur est émis, l'entretoise 20 en matériau à mémoire de forme est chauffée jusqu'à une température supérieure à sa température de transformation structurale. La structure de ce matériau redevient donc austénitique, ce qui a pour effet de lui faire reprendre sa forme initiale qui, dans ce cas, correspond à une plus grande longueur de l'entretoise 20.

Comme l'illustre la figure 2, un dimensionnement adéquat des composants de l'assemblage combiné à l'utilisation d'un matériau relativement malléable pour la vis 22 ont pour effet, lors de l'allongement de l'entretoise 20, d'allonger la vis 22 entre sa tête 22b et son extrémité filetée 22a. Cet allongement est suffisant pour supprimer la tension mécanique de maintien appliquée initialement sur la patte 18a par la vis 22 et pour créer un jeu J1 + J2 dans l'assemblage liant initialement la patte 18a au pied 12. Etant donné que le trou 18b est ouvert latéralement, l'appendice 18 est ainsi libéré, comme l'illustre très schématiquement la figure 2A.

Dans une variante de réalisation non représentée, le chauffage du matériau à mémoire de forme est obtenu sans utiliser l'énergie électrique du satellite, en orientant ce dernier après sa mise en orbite, de telle sorte que le matériau soit alors chauffé par l'énergie solaire.

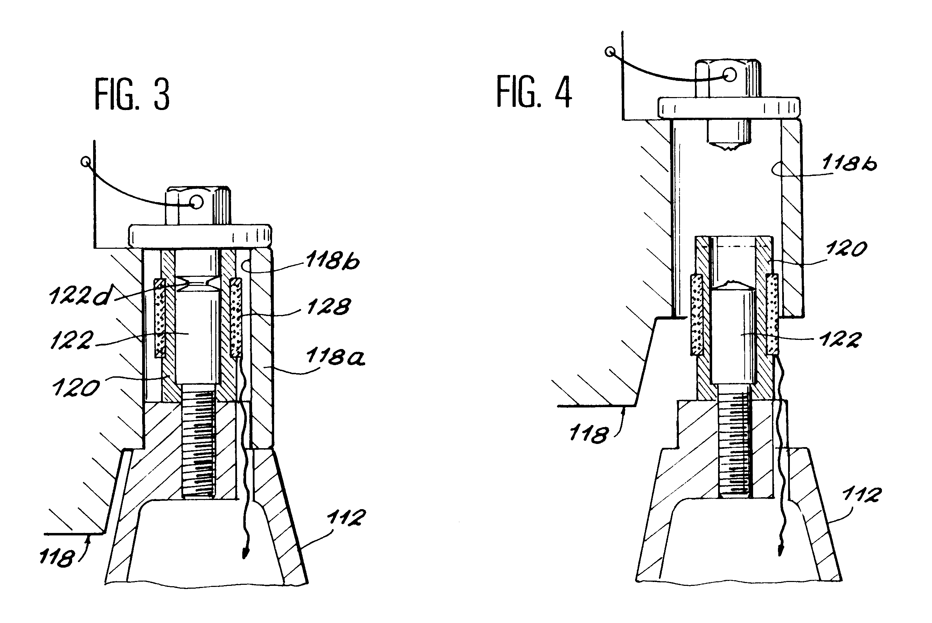

Dans une autre variante de réalisation illustrée sur les figures 3 et 4, l'agencement général de l'assemblage est le même que celui qui vient d'être décrit en se référant aux figures 1 et 2, de sorte que les organes identiques ou similaires, qui sont désignés pour faciliter la compréhension par les mêmes chiffres de référence augmentés de 100, ne sont pas décrits à nouveau.

Dans cette variante de réalisation, le trou 118b formé dans la patte 118a est un trou cylindrique qui ne débouche pas latéralement. Afin que l'allongement du manchon tubulaire 120 en matériau à mémoire de forme, consécutif à son chauffage par la résistance chauffante 128, libère l'appendice 118, il est donc nécessaire que cet allongement conduise à la cassure de la vis 122. A cet effet, cette dernière présente dans ce cas une zone de moindre résistance, formée par exemple en usinant une gorge 122d dans sa partie située à l'intérieur du manchon 120.

Comme l'illustre la figure 4, l'allongement du manchon 120 résultant de son chauffage provoque alors la cassure de la vis 122 au niveau de la gorge 122d et, par conséquent, la libération de l'appendice 118.

Bien entendu, l'invention n'est pas limitée aux modes de réalisation qui viennent d'être décrits à titre d'exemples, mais en couvre toutes les variantes. On observera notamment que l'organe de libération en matériau à mémoire de forme peut prendre des formes très différentes du manchon tubulaire décrit, par exemple pour s'adapter à des mécanismes de maintien de structures différentes tels que des mécanismes à étrier basculant. Dans ce dernier cas, l'organe de libération peut, par exemple, prendre la forme d'un crochet verrouillant l'étrier en position de liaison lors du lancement et dont le changement de forme consécutif au changement de phase du matériau à mémoire de forme libère automatiquement l'étrier.

## Revendications

1. Dispositif de liaison temporaire de plusieurs éléments entre eux, comprenant un mécanisme de maintien (22) apte à appliquer entre lesdits éléments une tension mécanique de maintien, et des moyens de libération (20) dont un actionnement a pour effet de supprimer ladite tension mécanique et de créer un jeu autorisant un mouvement relatif entre les éléments, caractérisé par le fait que les moyens de libération comprennent un organe de libération (20) réalisé en un matériau à mémoire de forme et coopérant avec le mécanisme de maintien (22).

2. Dispositif selon la revendication 1, caractérisé par le fait que les moyens de libération comprennent de plus des moyens de chauffage (28) situés à proximité dudit organe de libération (20).

3. Dispositif selon l'une quelconque des revendications 1 et 2, caractérisé par le fait que le mécanisme de maintien comprend une tige de liaison (22) présentant normalement une longueur telle que ladite tension mécanique est appliquée entre lesdits éléments, ledit organe de libération (20) étant agencé de façon à provoquer un allongement prédéterminé de la tige de liaison lorsque la température de l'organe de libération dépasse une température de changement de phase dudit matériau à mémoire de forme.

4. Dispositif selon la revendication 3, caractérisé par le fait que l'organe de libération a la forme d'une entretoise tubulaire (20) entourant ladite tige de liaison, et interposée entre une surface d'appui formée sur un premier desdits éléments et une surface d'appui formée sur une première extrémité de ladite tige de liaison (22).

5. Dispositif selon la revendication 4, caractérisé par le fait que la tige de liaison (22) comporte une deuxième extrémité filetée (22a) vissée dans le premier élément et traverse une partie en saillie (18a) du deuxième élément, de façon à presser normalement avec ladite tension mécanique cette partie en saillie entre la surface d'appui (12c) formée sur la première extrémité de la tige de liaison et une autre surface d'appui formée sur le premier élément.

6. Dispositif selon la revendication 5, caractérisé par le fait que la partie en saillie du deuxième élément est décalée axialement sur la tige de liaison (22), une entretoise tubulaire (26) disposée autour de l'organe de libération (20) étant interposée entre ladite partie en saillie et la surface d'appui formée sur la première extrémité de la tige de liaison.

7. Dispositif selon l'une quelconque des revendications 3 à 6, caractérisé par le fait que la tige de liaison (122) présente une zone de moindre résistance (122d) apte à se rompre lors dudit allongement prédéterminé de la tige de liaison.

8. Dispositif selon l'une quelconque des revendications précédentes, caractérisé par le fait que lesdits éléments comprennent un corps de satellite (10) et un appendice (18) devant être libéré après mise en orbite de ce satellite.

9. Procédé de libération d'éléments liés entre eux par un mécanisme de maintien (22) appliquant entre lesdits éléments une tension mécanique de maintien, caractérisé par le fait qu'il consiste à chauffer un organe de libération (20) réalisé en un matériau à mémoire de forme au-delà d'une température de changement de phase de ce matériau, cet organe de libération coopérant avec le mécanisme de maintien pour supprimer alors ladite tension mécanique et créer un jeu autorisant un mouvement relatif entre les éléments.

10. Procédé selon la revendication 9, caractérisé par le fait qu'on chauffe ledit organe de libération (20) au moyen de l'énergie solaire.

11. Procédé selon la revendication 9, caractérisé par le fait qu'on chauffe ledit organe de libération (20) par un moyen de chauffage (28) situé à proximité de cet organe.

## Patentansprüche

1. Vorrichtung zum zeitweiligen Verbinden mehrerer Elemente untereinander, die einen Haltemechanismus (22) umfaßt, geeignet, zwischen den genannten Elementen eine Haltespannung anzuwenden, und Freigabeeinrichtungen (20), deren Betätigung die Wirkung hat, die genannte mechanische Spannung aufzuheben und ein Spiel herzustellen, das eine Relativbewegung zwischen den Elementen gestattet,
dadurch **gekennzeichnet**,
daß die Freigabeeinrichtungen ein Freigabeorgan (20) enthalten, das hergestellt ist aus einem Werkstoff mit Formerinnerungsvermögen, und zusammenwirkt mit dem Haltemechanismus (22).

2. Vorrichtung nach Anspruch 1, dadurch gekennzeichnet, daß die Freigabeeinrichtungen außerdem Aufwärmeinrichtungen (28) umfassen, die sich in der Nähe der genannten Freigabeeinrichtungen (20) befinden.

3. Vorrichtung nach einem der Ansprüche 1 und 2, dadurch gekennzeichnet, daß der Haltemechnismus eine Verbindungsstange (22) umfaßt, die normalerweise eine solche Länge aufweist, daß die genannte mechanische Spannung zur Anwendung kommt zwischen den genannten Elementen, wobei das Freigabeorgan (20) so angeordnet ist, daß es eine vorbestimmte Dehnung der Verbindungsstange hervorruft, wenn die Temperatur des Freigabeorgans eine Phasenübergangstemperatur des genannten Werkstoffs mit Formerinnerungsvermögen überschreitet.

4. Vorrichtung nach Anspruch 3, dadurch gekennzeichnet, daß das Freigabeorgan die Form eines Distanzrohrs (20) aufweist, dabei die genannte Verbindungsstange umgibt und angeordnet ist zwischen einer Auflagefläche, ausgebildet an einem ersten der genannten Elemente, und einer Auflagefläche, ausgebildet an einem ersten Ende der genannten Verbindungsstange (22).

5. Vorrichtung nach Anspruch 4, dadurch gekennzeichnet, daß die Verbindungsstange (22) ein zweites, mit einem Gewinde versehenes Ende (22a) aufweist, das in das erste Element geschraubt wird und einen überstehenden Teil (18a) des zweiten Elements durchquert, so daß es normalerweise mit der genannten mechanischen Spannung diesen überstehenden Teil zwischen der Auflagefläche (12c), ausgebildet an dem ersten Ende der Verbindungsstange, und einer weiteren, an dem ersten Element ausgebildeten Auflagefläche preßt.

6. Vorrichtung nach Anspruch 5, dadurch gekennzeichnet, daß der überstehende Teil des zweiten Elements axial abgesetzt ist von der Verbindungsstange (22), wobei ein Distanzrohr (26) um das Freigabeorgan (20) herum angeordnet ist, untergebracht zwischen dem genannten überstehenden Teil und der Auflagefläche, die ausgebildet ist an dem ersten Ende der Verbindungsstange.

7. Vorrichtung nach einem der Ansprüche 3 bis 6, dadurch gekennzeichnet, daß die Verbindungsstange (122) eine Zone geringerer Festigkeit (122d) aufweist, die geeignet ist, bei der genannten vorbestimmten Dehnung der Verbindungsstange zu reißen.

8. Vorrichtung nach einem der vorhergehenden Ansprüche, dadurch gekennzeichnet, daß die genannten Elemente einen Satellitenrumpf (10) umfassen und ein Ansatzteil (18), das freigegeben werden soll nach dem Inumlaufbringen dieses Satelliten.

9. Verfahren zur Freigabe von miteinander durch einen Haltemechnismus (22) verbundenen Elementen, der zwischen den genannten Elementen eine mechanische Haltespannung ausübt, dadurch gekennzeichnet, daß es darin besteht, ein Freigabeorgan (20), das aus einem Werkstoff mit Formerinnerungsvermögen hergestellt ist, über eine Phasenübergangstemperatur dieses Werkstoffs hinaus zu erwärmen, wobei dieses Freigabeorgan zusammenwirkt mit dem Haltemechanismus, um dann die genannte mechanische Spannung aufzuheben und ein Spiel zu schaffen, das eine Relativbewegung zwischen den Elementen gestattet.

10. Vorrichtung nach Anspruch 9, dadurch gekennzeichnet, daß man das genannte Freigabeorgan (20) durch Sonnenenergie erwärmt.

11. Vorrichtung nach Anspruch 9, dadurch gekennzeichnet, daß man das genannte Freigabeorgan (20) durch Aufwärmeinrichtungen (28) erwärmt, die sich in der Nähe dieses Organs befinden.

## Claims

1. Device for the temporary interconnection of several elements, incorporating a holding mechanism (22) able to apply between the said elements a mechanical holding tension, and release means (20), whose actuation has the effect of eliminating said mechanical tension and of creating a clearance allowing a relative movement between the elements, characterized in that the release means (20) incorporate a release member made from a shape memory material and which cooperates with the holding mechanism (22).

2. Device according to claim 1, characterized in that the release means also incorporate heating means (28) located in the vicinity of the release member (20).

3. Device according to either of the claims 1 and 2, characterized in that the holding mechanism comprises a connecting rod (22) normally having a length such that said mechanical tension is applied between the said elements, the release member (20) being positioned so as to bring about a predetermined elongation of the connecting rod when the temperature of the release member exceeds a phase change temperature of said shape memory material.

4. Device according to claim 3, characterized in that the release member is in the form of a tubular spacer (20) surrounding said connecting rod and interposed between a bearing surface formed on a first of said elements and a bearing surface formed on a first end of said connecting rod (22).

5. Device according to claim 1, characterized in that the connecting rod (22) incorporates a second threaded end (22a) screwed into the first element and traversing a projecting portion (18a) of the second element, so as to normally press with said mechanical tension the said projecting portion between the bearing surface (12c) formed on the first end of the connecting rod and another bearing surface formed on the first element.

6. Device according to claim 5, characterized in that the projecting portion of the second element is axially displaced on the connecting rod (22), a tubular spacer (26) positioned around the release member (20) being interposed between said projecting portion and the bearing surface formed on the first end of the connecting rod.

7. Device according to any one of the claims 3 to 6, characterized in that the connecting rod (122) has a zone of reduced resistance (122d) which can break during said predetermined elongation of the connecting rod.

8. Device according to any one of the preceding claims, characterized in that said elements incorporate a satellite body (10) and an appendage (18) to be released after the putting into orbit of said satellite.

9. Process for the release of elements interconnected by a holding mechanism (22) applying between the said elements a mechanical holding tension, characterized in that it consists of heating a release member (20) made from a shape memory material to beyond a phase change temperature of said material, said release member cooperating with the holding mechanism in order to then eliminate said mechanical tension and create a clearance allowing a relative movement between the elements.

10. Process according to claim 9, characterized in that the release member (20) is heated by means of solar energy.

11. Process according to claim 9, characterized in that said release member (20) is heated by a heating means (28) located in the vicinity of said member.
